# EUROPEAN PATENT SPECIFICATION

(11) **EP 1 364 856 B1**
(45) Date of publication and mention of the grant of the patent: **31.12.2008**
(21) Application number: 02781871.5
(22) Date of filing: 03.12.2002
(51) Int. Cl.: B62D 1/16, B62D 25/14

(54) **VEHICLE STEERING COLUMN SUPPORT STRUCTURE**
STÜTZKONSTRUKTION FÜR FAHRZEUGLENKSÄULE
STRUCTURE DE SUPPORT DE COLONNE DE DIRECTION DE VEHICULE

(30) Priority: 03.12.2001 JP 2001368875
(43) Date of publication of application: 26.11.2003
(73) Proprietor: NSK LTD., Shinagawa-ku, Tokyo 141-8560 (JP)
(72) Inventor: MATSUMIYA, Takeshi, c/o NSK LTD., Maebashi-shi, Gunma 371-0853 (JP)
(74) Representative: Cross, James Peter Archibald
(86) International application number: PCT/JP2002/012652
(87) International publication number: WO 2003/047944

(56) References cited:
- DE-A1- 10 040 824
- JP-A- 8 040 285
- JP-A- 56 002 265
- JP-U- 63 053 881
- JP-Y2- 60 030 137
- US-A- 5 931 520

## Description

### FIELD OF THE INVENTION

The present invention relates to a support bracket for supporting a steering column for a motor vehicle.

### BACKGROUND ART

In a steering apparatus for a motor vehicle, the steering, power from the steering wheel is transmitted to as steering gear mechanism for the steerable wheels through a steering shaft. This steering shaft is rotatably supported inside a steering column which is attached to the car body.

This steering column may allow tilt adjustment or telescopic adjustment of the steering column, in accordance with a posture or the like of the driver Further, in order to protect the driver at the time of secondary collision, the steering column may be collapsed at the secondary collision to absorb the shock energy.

Such a steering column is attached to the car body through a support bracket. This support bracket is adapted to keep a predetermined rigidity of the steering column. Also, this support bracket may be provided with a tilt and/or telescopic adjusting mechanism or a shock absorbing mechanism as described above.

This support bracket is generally constituted by combining plural parts or constituent pieces manufactured of metal plate by pressing, or of nonferrous metal by die-casting.

However, specifications of the plural constituent pieces for assembling the support bracket are required to have different shapes for every car models since the specifications of the parts are different for every car models. As a result, it becomes difficult to prepare or share these parts on a modular basis, which is not optimal from the view point of the manufacturing cost (including the cost of materials, the processing cost, the assembling cost, and the cost for mass production) and could be improved much.

It is also possible to manufacture these parts by extrusion molding. However, by the conventional extrusion molding method, there arises a large amount of waste to be eliminated which results in a poor yield of the material when the extrusion-molded products are processed to the parts.

DE 100 40 824 A1 discloses a steering column hanger beam structure wherein a beam extends between left and right front pillars, and comprises a drivers side hanger beam attached to one of the vehicle front pillars by a flange.

US-A-5 931 520 discloses an instrument panel reinforcement structure comprising driver and passenger side cross tubes that are preferably aluminium alloy extrusions.

US-A-4 424 721 is regarded as closest prior art and discloses a support bracket according to the preambles of claims 1 and 2.

### SUMMARY OF THE INVENTION

The present invention has been made taking the above-described situation into consideration, and an object thereof is to seek to provide a support bracket for supporting a steering column for a motor vehicle that is capable of meeting different specifications of various car models, attaining the effect of mass production, and further reducing the manufacturing cost with the parts of a support bracket of the steering column prepared on a modular basis.

According to a first aspect of the present invention, there is provided a support bracket according to claim 1.

According to embodiments, a support bracket is composed of a plurality of parts so that the support bracket can be assembled by mutually fitting the plurality of parts which have been respectively formed by extrusion molding to have the cross sections of the same shape and size and cut to the predetermined lengths. For this reason, the parts or constituent pieces of the support bracket can be formed on the modular basis. For instance, when the model of the car is to be changed, any car model with different specifications can be manufactured by replacing some of the plural parts of the support bracket with other ones, and the effect of mass production can be obtained.

Also, the separate plural parts are, according to embodiments, produced by cutting to the predetermined lengths the blanks each having been formed by extrusion molding to have a lateral cross section in the same shape and the size. For this reason, an amount of waste to be eliminated of the products by extrusion molding may be reduced, and a good yield of the material can be attained. Furthermore, since having a high absolute strength and a high elasticity, compared with die-cast products, the products by extrusion molding have superior performance at collision. Further, with the products by extrusion molding, it is possible to form a slide structure in the axial direction easily, which can be advantageously utilized as a guide for a collapse at the secondary collision. Still further, the products by extrusion molding can be formed at a remarkably low cost, compared with products formed by pressing.

According to a second aspect of the present invention, there is provided a support bracket according to claim 2.

According to embodiments, said secondary member can be formed to have a lateral cross section in the same shape and size over the entire length thereof.

According to embodiment, parts or constituent pieces of a support bracket of a steering column can be formed on a modular basis to be used for various car models having different specifications. Thus, it is possible to obtain the effect of mass production and further, to reduce the manufacturing cost.

Preferable features are set out in claims 3 to 5.

According to a third aspect of the present invention, there is provided a vehicle according to claim 6.

### BRIEF DESCRIPTION OF THE DRAWINGS

In order that the present invention may be more readily understood, an embodiment thereof will now be described, by way of example only, with reference to the accompanying drawings, of which:
FIG 1A is an exploded perspective view of a support bracket of a steering column According to a first preferred embodiment of the present invention, and FIG. 1B is a side view of the steering column and the support bracket according to the first embodiment;
FIG. 2 is a front view of the support bracket of the steering column according to the first embodiment; and
FIG. 3 is an exploded erection view of an exemplary support bracket of a steering column.

### PRESENTLY PREFERRED EMBODIMENT OF THE INVENTION

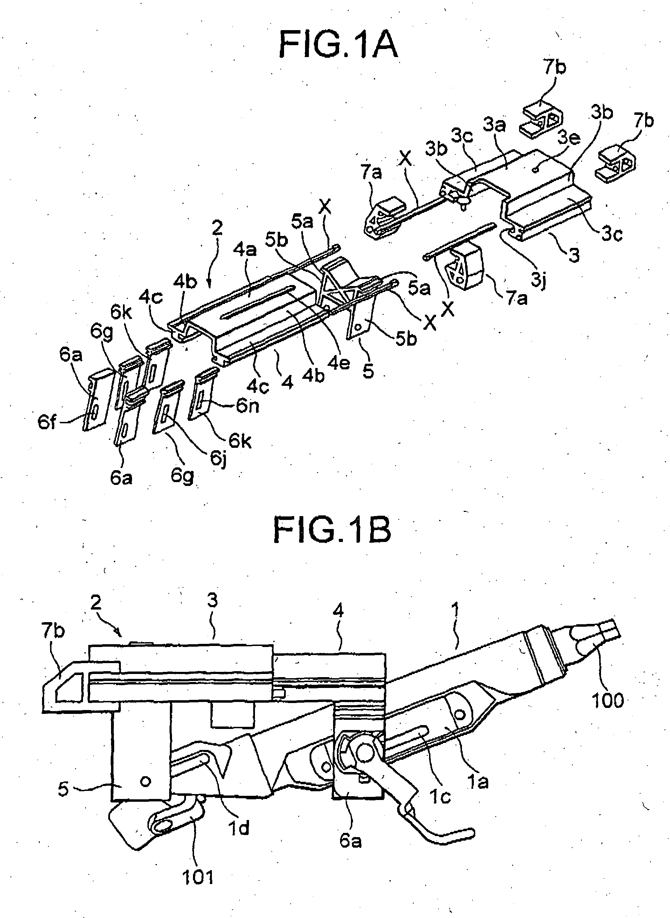

As shown in FIG. 1B, the steering column 1 is attached to the car body through a support bracket 2. It is arranged such that the steering column 1 can be subjected to a tilt adjustment and a telescopic adjustment.

A steering wheel (not shown) is securely fixed to the upper end of a steering shaft 100 which is rotatably supported by the steering column at the back side of the car, and the lower end of the steering shaft at the front side of the car is connected to a steering gear mechanism (not shown) via a universal joint 101.

The support bracket 2 is composed of plural parts or constituent pieces dividedly designed in advance so that the support bracket 2 can be assembled by press-fitting of these plural parts each having a lateral cross section in the same shape and size over the entire length thereof in longitudinal direction of the steering column. In the present specification, the longitudinal direction of the steering column means a direction in which the steering column is etended, i.e. the longitudinal direction of the car. The support bracket 2 is mainly composed or a plurality of parts comprising a first wing member 3 extended in the width direction of the car and having the lateral cross section in the same shape and size over the entire length thereof in the longitudinal direction of the steering column, a second wing member 4 extended in the width direction of the car in the same manner, fitted inside the first wing member 3 and having a cross section in the same shape and size over the entire length thereof in the longitudinal direction of the steering column, a support member 5 securely fitted inside the first wing member 3 at the front of the car and having a cross section in the same shape and size over the entire length thereof in the longitudinal direction of the steering column, a plurality of support plates 6a, 6g and 6k each securely fitted inside the second wing member 4, provided with an elongated hole for tilt adjustment and having the lateral cross section in the same shape and size over the entire length thereof in the longitudinal direction of the steering column, and mount members 7a and 7b respectively fitted on the both sides of the first wing member 3. Male and female portions are provided for each adjacent members of the first wing member 3, the second wing member 4, the support member 5, the plurality of support plates 6a, 6g and 6k, and the mount members 7a and 7b, as shown in FIG. 1B, to be fitted to and engaged with each other, thereby achieving the fit assembling with press fit of these members.

In the present embodiment, the divided or separate members are classified into primary members which can be formed in the common shapes and sizes, in respective of differences of shapes, sizes, etc., in the car structure, which are different in accordance with several car models, and secondary members formed to cope with the differences of shapes, sizes, etc., in the car structure in accordance with the car models. The primary member include a member which is formed by dividing a partial portion having a complicated shape to have a simplifies shape.

The first wing member 3 is integrally formed of a flat top plate portion 3a to be secured to a strength member of the car body side, side plate portions 3b and 3b extending substantially in the vertical direction on the both outer sides of the top plate portion 3a, and laterally extending portions 3c and 3c extending on the both sides from the side plate portion 3b and 3b in a substantially horizontal direction. The mount members 7a and 7b are securely fitted on the both outer end portions of the first wing member 3. Thus, a bracket on the car body side is constituted by the first wing member 3, the front support member 5 and the mount members 7 and 7b.

Engagement dovetail grooves 3j extending in the longitudinal direction are formed on the inner sides of the lower ends of the both side plate portions 3b and 3b of the first wing member 3, and male projections 5a and 5a formed on the both sides of the upper end of the first front support members5 are securely-fitted in those dovetail grooves 3j on the front side of the car. The first front support member 5 has both of side plate portions 5b and 5b extending downward and a diagonal members 5c for separating and supporting these side plate portions, thereby constituting a lower bracket on the car body side as one body with the first wing member 3.

The second wing member 4 has a shape corresponding to that of the first wing member 3 to be fitted in the first wing member 3, and is integrally formed of a flat top plate portion 4a, side plate portions 4b and 4b extending substantially in the vertical direction on the both outer sides of this top plate portion 4a, and laterally extending portions 4c and 4c extending on the both sides from the side plate portions 4b and 4b in a substantially horizontal direction, like the first wing member 3.

Engagement dovetail grooves 4d and 4d extending in the longitudinal direction are formed on the inner sides of the lower ends of the both side plate portions 4b and 4b of the second wing member 4, and upper end projections 6b of first rear support members 6a are fitted and fixed to these dovetail grooves 4d and 4d at the rear side of the car. The first rear support members 6a are plate-like members extending downward and are brought into contact with the lower surfaces of the side plate portions 4b and 4b and each has a projection 6c which is projected outward. A dovetail groove 6d extending the longitudinal direction is formed on this projection 6c. Outside each first rear support member 6a, a second rear support member 6g is secured with a projection 6h thereof fitted in the dovetail groove of the first rear support member. A projection 6i is formed on the outer side of the upper end of each second rear support member 6g, and this projection is formed with a dovetail groove extending in the longitudinal direction. Outside each second rear support member 6g, a third rear support members 6k having the same shape as that of the second rear support member 6g is fitted and secured in the second rear support member 6g, in the same manner as the second rear support member 6g. thus, the second wing member 4, the first, second and third rear support members 6a, 6g and 6k constitute a column-side bracket.

A circular hole 3e is formed on the top plate portion 3a of the first wing member 3, as shown in FIG. 1A, while an elongated hole 4e is formed on the top plate portion 4a of the second wing member 4 which is superposed on the top plate portion 3a of the first wing member 3, in opposition to this circular hole 3e. The top plate portion 3a of the first wing member 3 and the top plate portion 4a of the second wing member 4 are attached and secured to the car body strength member through these two holes by the use of an appropriate securing means such as unrepresented bolts, or the like. However, when a shock load exceeding a predetermined level is applied on the column-side bracket including the second wing member 4, the column-side bracket is movable with respect to the body-side bracket comprising the first wing member 3.

The lower ends of the downward projections 3d and 3d at the outer ends of the laterally extending portions 3c and 3c of the first wing member 3 integrally comprise inward projections 3f and 3f which are projected further inwardly. On the other hand, the outer end portions of the laterally extending portions 4c and 4c of the second wing member 4 have the lower surfaces opposite to the upper surfaces of the inward projections 3f and 3f of the first wing member 3.

In the support bracket 2, a space thus formed between the body-side bracket and the column-side bracket is provided with a shock energy absorbing mechanism X which absorbs a shock energy applied on the steering column 1 at the secondary collision: Detailed description of the shock absorbing mechanism X will be omitted since it is not directly related to the present invention.

The steering column 1 is supported to be rotatable by the front support member 5 at the lower end thereof. On the steering column 1, side wall portions 1a which are integrally secured to the lower portions of the column are fastened and fixed to the rear support members 6a, 6g and 6k which constitute the column-side bracket through a fastening mechanism in a known structure. Elongated holes 1c and 1d which are formed in a lower portion of the column and are extended in the axial direction of the column are to be used for telescopic positioning adjustment of the column (FIG. 1B), and elongated holes 6f, 6j and 6n which are formed on the support members 6a, 6g and 6k of the column-side bracket and are extended vertically are to be used for tilt positioning adjustment of the column (FIG. 1B).

In the present embodiment, the first wing member 3 and the second wing member 4 are corresponding to the primary members described above, and can be used in common to several car models. It is intended that the front support member 5, the plural rear support members 6a, 6g and 6k, and the mount members 7a and 7b be corresponding to the secondary members which are appropriately selected in accordance with the shape or the size of a car model to be used.

The divided or separate parts 3 to 7 of the support bracket 2 are manufactured by cutting, to predetermined lengths, the respective blanks each having been formed to have a cross section in the same shape and size over the entire lengths in the longitudinal direction of the steering column by extrusion molding of a nonferrous metal such as aluminum. After this cutting, grooves necessary for tilt adjustment, notches, etc., are processed.

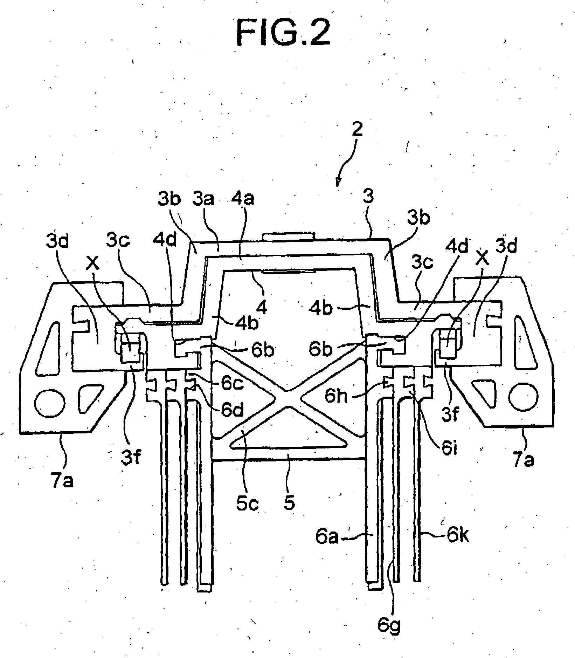

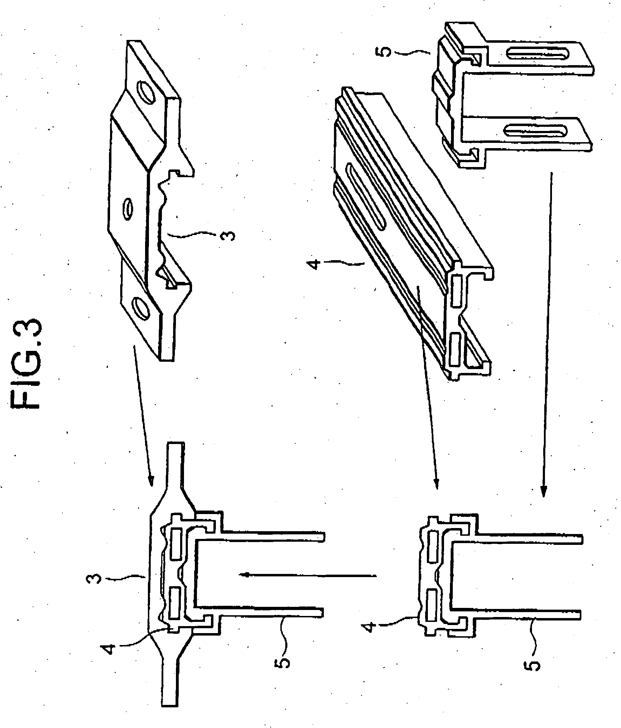

The support bracket 2 can be assembled by mutually press-fitting these parts 3 to 7, as shown in FIGS. 2 and 3. Note that, as shown in FIG. 3, the second wing member 4 and the support member 5 which is press-fitted inside the wing member 4 are secured by caulking or welding, or by use of pins.

As described above, according to the present embodiment, the support bracket 2 is so designed as to be divided into the plural parts 3 to 7 in advance, whereby the support bracket 2 can be assembled by press-fitting the plural parts 3 to 7 respectively having the cross sections in the same shape and size over the entire lengths in the longitudinal direction of the steering column. For this reason, the parts 3 to 7 of the support bracket 2 can be formed as modules. For instance, when the car is to be changed to be of another model, some of the plural parts 3 to 7 of the support bracket 2 can be replaced so as to meet different specifications of various car models and to bring out the effect of mass production.

The divided or separate parts 3 to 7 of the support bracket 2 are manufactured by cutting, to predetermined lengths, blanks each of which has been formed by extrusion molding to have the cross sections in the same shape and size over the entire length in the direction of the steering column. For this reason, there remains a small amount of waste to be discarded of the extrusion-molded products, and a high yield from material can be attained. Further, the extrusion-molded products have the high absolute strength and elasticity, compared with die-cask products, and are excellent in the performance at collision. Still further, with the extrusion-molded products, a slide structure in the axial direction can be easily formed, so that this can be used as a guide for a collapse at the secondary collision. In addition, the extrusion-molded products have an advantage that they can be manufactured at a remarkably low cost, compared with the products formed by pressing.

Note that the parts 3 to 7 of the supports bracket 2 which have been mutually press-fitted have shapes which do not allow movement or rogation thereof in a direction other than the fitting direction, so that the parts can not be separated apart in a direction, other than the fitting direction. If these parts are secured by caulking, or the like, after the press-fitting, they can not be separated also in the fitting direction.

As seen from the above description, according to the present embodiment, it is intended to form the parts 3 to 7 of the support bracket 2 of the steering column 1 as modules, so as to meet the different specifications of the various car models, thereby bringing out the effect of mass production and, resultantly, attaining reduction the manufacturing cost.

Note that the present invention is not-limited to the embodiment described above, but can be varied in several manners.

As described above, according to an embodiment of the present invention, the support bracket is composed of a plurality of parts which have been designed dividedly in advance and formed respectively to have lateral cross sections in the same shape and size by extrusion molding and cut to a predetermined lengths, so that the support bracket can be assembled by mutually fitting these parts. For this reason, it is possible to form the respective parts of the support bracket as modules. For example, when a car model is to be changed, it is possible to meet various specifications of different car types by replacing some of the parts of the support bracket, thereby bringing out the effect of mass production.

Each of the divided or separate parts is manufactured by cutting to a predetermined length a blank which has been formed to have a cross section in the same shape and size by the extrusion molding. For this reason, there remains a small mount of waste to be discarded of the extrusion-molded products, so as to attain a high material yield. Since having a higher absolute strength' than dis-cast products and elasticity, the extrusion-molded products are advantageously, excellent in the performance at collision. Further, with the extrusion-molded products, a slide structure in the axial direction can be easily formed, which can be advantageously used as a guide to a collapse at the secondary collision Still further, the extrusion-molder products can be manufactured at a conspicuously lower cost, compared with products by pressing.

As described above; according to an embodiment of the present invention, it is possible to form the respective constituent pieces for forming a support bracket of a steering column on a modular basis, so as to meet different specifications of different car models and to bring out the effect of mass production, thereby resultantly reducing the manufacturing cost.

## Claims

1. A support bracket (2) for supporting a steering column (1) for a motor vehicle, comprising:
(i) at least one first part (3) formed by cutting, to a predetermined length, a blank formed by extrusion molding, such that the at least one first part (3) has a lateral cross section of constant shape and size over its entire length in the longitudinal direction of a motor vehicle and being formed with a groove (3j) or a projection extending in said longitudinal direction, and (ii) at least one second part (5) formed by cutting, to a predetermined length, a blank formed by extrusion molding, such that the at least one second part (5) has a cross section of constant shape and size in said longitudinal direction, the at least one second part (5) being formed with a projection (5a) or a groove extending in said longitudinal direction,
wherein the groove or the projection of said at least one first part (3) and the projection (5a) or groove of said at least one second part (5) are fitted to each other to form said support bracket (2), being **characterised in that**:
said support bracket (2) further comprises (iii) a third part (4) formed by cutting, to a predetermined length, a blank formed by extrusion molding, such that the third part (4) has a cross section of constant shape and size in said longitudinal direction, the third part (4) being formed with a projection or a groove extending in said longitudinal direction, the groove or the projection of said third part (4) and the groove or projection of said first part (3) being fitted to each other;
said second part (5) supports a motor vehicle front portion of a steering column (1) and said third part (4) supports a motor vehicle rear portion of the steering column (1); and
said first part (3) is fixed to a body of the motor vehicle.

2. A support bracket (2) for supporting a steering column (1) for a motor vehicle, comprising:
a primary member (3) having a lateral cross section of constant shape and size over its entire length in the longitudinal direction of a motor vehicle, usable in common by plural car models, and being formed with a groove (3j) or a projection extending in said longitudinal direction; and
a secondary member (5) having a partial shape according to the body structure of a specific car model, the secondary member having a lateral cross section of constant shape and size in said longitudinal direction and being formed with a projection (5a) or a groove extending in said longitudinal direction,
wherein the groove or projection of the primary member (3) and the projection or groove of the secondary member (5) are fitted to each other to form said support bracket (2), being **characterised in that**:
said support bracket (2) further comprises (iii) a third member (4) formed by cutting, to a predetermined length, a blank formed by extrusion molding, such that the third member (4) has a cross section of constant shape and size in said longitudinal direction, the third member (4) being formed with a projection or a groove extending in said longitudinal direction, the groove or the projection of said third member (4) and the groove or projection of said primary member (3) being fitted to each other;
said secondary member (5) supports a motor vehicle front portion of a steering column (1) and said third member (4) supports a motor vehicle rear portion of the steering column (1); and
said primary member (3) is fixed to a body of the motor vehicle.

3. A support bracket (2) according to claim 2, wherein the primary member (3) is formed by cutting to a predetermined length a blank which has been formed by extrusion molding to have said lateral cross section of constant shape and size over its entire length in the longitudinal direction of the motor vehicle.

4. A support bracket (2) according to claim 2 or 3, wherein said secondary member (5) is formed by cutting to a predetermined length a blank which has been formed by extrusion, molding to have said lateral cross section of constant shape and size in said longitudinal direction.

5. A support bracket (2) according to any preceding claim, wherein fitted portions of said groove and said projections are fixed by caulking or a pin.

6. A vehicle comprising a support bracket (2), according to any preceding claim.

## Patentansprüche

1. Stützklammer (2) zum Stützen einer Lenksäule (1) für ein Motorfahrzeug, umfassend:
(i) zumindest einen ersten Teil (3), der durch Schneiden eines Rohlings, welcher so durch Extrusionsformung gebildet wurde, dass der zumindest eine erste Teil (3) über seine gesamte Länge in der Längsrichtung eines Motorfahrzeugs einen seitlichen Querschnitt von konstanter Form und Größe aufweist und mit einer Vertiefung (3j) oder einem Vorsprung gebildet ist, die bzw. der sich in der Längsrichtung erstreckt, in eine vorbestimmte Länge gebildet ist, und (ii) zumindest einen zweiten Teil (5), der durch Schneiden eines Rohlings, welcher so durch Extrusionsformung gebildet wurde, dass der zumindest eine zweite Teil (5) in der Längsrichtung einen Querschnitt von konstanter Form und Größe aufweist, in eine vorbestimmte Länge gebildet ist, wobei der zumindest eine zweite Teil (5) mit einem Vorsprung (5a) oder einer Vertiefung gebildet ist, der bzw. die sich in der Längsrichtung erstreckt,
wobei die Vertiefung oder der Vorsprung des zumindest einen ersten Teils (3) und der Vorsprung (5a) oder die Vertiefung des zumindest einen zweiten Teils (5) aneinander gefügt sind, um die Stützklammer (2) zu bilden, **dadurch gekennzeichnet dass**
die Stützklammer (2) ferner (iii) einen dritten Teil (4) umfasst, der durch Schneiden eines Rohlings, welcher so durch Extrusionsformung gebildet wurde, dass der dritte Teil (4) in der Längsrichtung einen Querschnitt von konstanter Form und Größe aufweist, in eine vorbestimmte Länge gebildet ist, wobei der dritte Teil (4) mit einem Vorsprung oder einer Vertiefung gebildet ist, der bzw. die sich in der Längsrichtung erstreckt, wobei die Vertiefung oder der Vorsprung des dritten Teils (4) und die Vertiefung oder der Vorsprung des ersten Teils (3) aneinander gefügt sind;
wobei der zweite Teil (5) einen an der Vorderseite des Motorfahrzeugs gelegenen Abschnitt einer Lenksäule (1) stützt, und der dritte Teil (4) einen an der Hinterseite des Motorfahrzeugs gelegenen Abschnitt der Lenksäule (1) stützt; und
der erste Teil (3) an einem Aufbau des Motorfahrzeugs fixiert ist.

2. Stützklammer (2) zum Stützen einer Lenksäule (1) für ein Motorfahrzeug, umfassend:
ein primäres Element (3) mit einem seitlichen Querschnitt von konstanter Form und Größe über seine gesamte Länge in der Längsrichtung eines Motorfahrzeugs, das durch mehrere Fahrzeugmodelle gemeinsam verwendbar ist und mit einer Vertiefung (3j) oder einem Vorsprung gebildet ist, die bzw. der sich in der Längsrichtung erstreckt; und
ein sekundäres Element (5) mit einer teilweisen Form gemäß der Aufbaukonstruktion eines bestimmten Fahrzeugmodells, wobei das sekundäre Element in der Längsrichtung einen seitlichen Querschnitt von konstanter Form und Größe aufweist und mit einem Vorsprung (5a) oder einer Vertiefung gebildet ist, der bzw. die sich in der Längsrichtung erstreckt,
wobei die Vertiefung oder der Vorsprung des primären Elements (3) und der Vorsprung oder die Vertiefung des sekundären Elements (5) aneinander gefügt sind, um die Stützklammer (2) zu bilden, **dadurch gekennzeichnet, dass**
die Stützklammer (3) ferner (iii) ein drittes Element (4) umfasst, das durch Schneiden eines Rohlings, welcher so durch Extrusionsformung gebildet wurde, dass das dritte Element (4) in der Längsrichtung einen Querschnitt von konstanter Form und Größe aufweist, in eine vorbestimmte Länge gebildet ist, wobei das dritte Element (4) mit einem Vorsprung oder einer Vertiefung gebildet ist, der bzw. die sich in der Längsrichtung erstreckt, wobei die Vertiefung oder der Vorsprung des dritten Elements (4) und die Vertiefung oder der Vorsprung des primären Elements (3) aneinander gefügt sind;
wobei das sekundäre Element (5) einen an der Vorderseite des Motorfahrzeugs gelegenen Abschnitt einer Lenksäule (1) stützt, und das dritte Element (4) einen an der Hinterseite des Motorfahrzeugs gelegenen Abschnitt der Lenksäule (1) stützt; und
das primäre Element (3) an einem Aufbau des Motorfahrzeugs fixiert ist.

3. Stützklammer (2) nach Anspruch 2, wobei das primäre Element (3) durch Schneiden eines Rohlings, welcher so durch Extrusionsformung gebildet wurde, dass er über seine gesamte Länge in der Längsrichtung des Motorfahrzeugs einen seitlichen Querschnitt von konstanter Form und Größe aufweist, in eine vorbestimmte Länge gebildet ist.

4. Stützklammer (2) nach Anspruch 2 oder 3, wobei das sekundäre Element (5) durch Schneiden eines Rohlings, welcher so durch Extrusionsformung gebildet wurde, dass er in der Längsrichtung einen seitlichen Querschnitt von konstanter Form und Größe aufweist, in eine vorbestimmte Länge gebildet ist.

5. Stützklammer (2) nach einem der vorhergehenden Ansprüche, wobei die aneinander gefügten Abschnitte der Vertiefung und der Vorsprünge durch Verstemmen oder einen Stift fixiert sind.

6. Fahrzeug, umfassend eine Stützklammer (2) nach einem der vorhergehenden Ansprüche.

## Revendications

1. Etrier de support (2) destiné à supporter une colonne de direction (1) pour un véhicule à moteur, comportant :
(i) au moins une première partie (3) formée par découpe, à une longueur prédéterminée, d'une ébauche formée par moulage par extrusion, de telle sorte que la au moins une première partie (3) a une section transversale latérale d'une forme et d'une dimension constantes sur toute sa longueur dans la direction longitudinale d'un véhicule à moteur, et est formée avec une rainure (3j) ou une saillie s'étendant dans ladite direction longitudinale, et (ii) au moins une deuxième partie (5) formée par découpe, à une longueur prédéterminée, d'une ébauche formée par moulage par extrusion, de telle sorte que la au moins une deuxième partie (5) a une section transversale d'une forme et d'une dimension constantes dans ladite direction longitudinale, la au moins une deuxième partie (5) étant munie d'une saillie (5a) ou d'une rainure s'étendant dans ladite direction longitudinale,
dans lequel la rainure ou la saillie de ladite au moins une première partie (3) et la saillie (5a) ou la rainure de ladite au moins une deuxième partie (5) sont raccordées l'une à l'autre pour former ledit étrier de support (2), **caractérisé en ce que** :
ledit étrier de support (2) comporte en outre (iii) une troisième partie (4) formée par découpe, à une longueur prédéterminée, d'une ébauche formée par moulage par extrusion, de telle sorte que la troisième partie (4) a une section transversale d'une forme et d'une dimension constantes dans ladite direction longitudinale, la troisième partie (4) étant munie d'une saillie ou d'une rainure s'étendant dans ladite direction longitudinale, la rainure ou la saillie de ladite troisième partie (4) et la rainure ou la saillie de ladite première partie (3) étant raccordées l'une à l'autre,
ladite deuxième partie (5) supporte une partie avant de véhicule à moteur d'une colonne de direction (1), et ladite troisième partie (4) supporte une partie arrière de véhicule à moteur de la colonne de direction (1), et
ladite première partie (3) est fixée sur une carrosserie du véhicule à moteur.

2. Etrier de support (2) destiné à supporter une colonne de direction (1) pour un véhicule à moteur, comportant :
un élément principal (3) ayant une section transversale latérale d'une forme et d'une dimension constantes sur toute sa longueur dans la direction longitudinale d'un véhicule à moteur, pouvant être utilisé en commun par plusieurs modèles de voiture, et étant muni d'une rainure (3j) ou d'une saillie s'étendant dans ladite direction longitudinale, et
un élément secondaire (5) ayant une forme partielle selon la structure de carrosserie d'un modèle de véhicule spécifique, l'élément secondaire ayant une section transversale latérale d'une forme et d'une dimension constantes dans ladite direction longitudinale, et étant muni d'une saillie (5a) ou d'une rainure s'étendant dans ladite direction longitudinale,
dans lequel la rainure ou la saillie de l'élément principal (3) et la saillie ou la rainure de l'élément secondaire (5) sont raccordées l'une à l'autre pour former ledit étrier de support (2), **caractérisé en ce que** :
ledit étrier de support (2) comprend en outre (iii) un troisième élément (4) formé par découpe, à une longueur prédéterminée, d'une ébauche formée par moulage par extrusion, de telle sorte que le troisième élément (4) a une section transversale d'une forme et d'une dimension constantes dans ladite direction longitudinale, le troisième élément (4) étant formé avec une saillie ou rainure s'étendant dans ladite direction longitudinale, la rainure ou la saillie dudit troisième élément (4) et la rainure ou la saillie dudit élément principal (3) étant raccordées l'une à l'autre,
ledit élément secondaire (5) supporte une partie avant de véhicule à moteur d'une colonne de direction (1), et ledit troisième élément (4) supporte une partie arrière de véhicule à moteur de la colonne de direction (1), et
ledit élément principal (3) est fixé sur une carrosserie du véhicule à moteur.

3. Etrier de support (2) selon la revendication 2, dans lequel l'élément principal (3) est formé par découpe, à une longueur prédéterminée, d'une ébauche qui a été formée par moulage par extrusion, pour avoir ladite section transversale latérale d'une forme et d'une dimension constantes sur toute sa longueur dans la direction longitudinale du véhicule à moteur.

4. Etrier de support (2) selon la revendication 2 ou 3, dans lequel ledit élément secondaire (5) est formé par découpe, à une longueur prédéterminée, d'une ébauche qui a été formée par moulage par extrusion, pour avoir ladite section transversale latérale d'une forme et d'une dimension constantes dans ladite direction longitudinale.

5. Etrier de support (2) selon l'une quelconque des revendications précédentes, dans lequel des parties raccordées de ladite rainure et desdites saillies sont fixées par matage, ou par une broche.

6. Véhicule comportant un étrier de support (2) selon l'une quelconque des revendications précédentes.
